(19) Europäisches Patentamt / European Patent Office / Office européen des brevets

(11) **EP 4 488 886 A1**

(12) **EUROPEAN PATENT APPLICATION**
published in accordance with Art. 153(4) EPC

(43) Date of publication:
   **08.01.2025 Bulletin 2025/02**

(21) Application number: **23765980.0**

(22) Date of filing: **07.03.2023**

(51) International Patent Classification (IPC):
   **G06N 5/04** $^{(2023.01)}$

(52) Cooperative Patent Classification (CPC):
   **G06N 5/04**

(86) International application number:
   **PCT/CN2023/080018**

(87) International publication number:
   **WO 2023/169402 (14.09.2023 Gazette 2023/37)**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **KH MA MD TN**

(30) Priority: **07.03.2022 CN 202210224481**
   **09.08.2022 CN 202210958867**

(71) Applicant: **VIVO MOBILE COMMUNICATION CO.,
   LTD.
   Dongguan, Guangdong 523863 (CN)**

(72) Inventors:
   • **CHONG, Weiwei**
     **Dongguan, Guangdong 523863 (CN)**
   • **CHENG, Sihan**
     **Dongguan, Guangdong 523863 (CN)**
   • **WU, Xiaobo**
     **Dongguan, Guangdong 523863 (CN)**

(74) Representative: **Murgitroyd & Company
   Murgitroyd House
   165-169 Scotland Street
   Glasgow G5 8PL (GB)**

(54) **MODEL ACCURACY DETERMINATION METHOD AND APPARATUS, AND NETWORK SIDE DEVICE**

(57)   This application pertains to the field of mobile communication, and discloses a model accuracy determining method and apparatus, and a network-side device. The model accuracy determining method in embodiments of this application includes: performing, by a first network element, inference on a task based on a first model; determining, by the first network element, first accuracy corresponding to the first model, where the first accuracy is used to indicate accuracy of the first model on an inference result of the task; and in a case that the first accuracy reaches a preset condition, sending, by the first network element, first information to a second network element, where the first information is used to indicate that accuracy of the first model does not meet an accuracy requirement or decreases, where the second network element is a network element that provides the first model.

```
                                                    S210
┌──────────────────────────────────────────────────────┐
│ A first network element performs inference on a task   │
│ based on a first model                                 │
└──────────────────────────────────────────────────────┘
                          │
                          ▼                         S220
┌──────────────────────────────────────────────────────┐
│ The first network element determines first accuracy    │
│ corresponding to the first model, where the first       │
│ accuracy is used to indicate accuracy of the first      │
│ model on an inference result of the task                │
└──────────────────────────────────────────────────────┘
                          │
                          ▼                         S230
┌──────────────────────────────────────────────────────┐
│ In a case that the first accuracy reaches a preset      │
│ condition, the first network element sends first        │
│ information to a second network element, where the      │
│ first information is used to indicate that accuracy     │
│ of the first model does not meet an accuracy            │
│ requirement or decreases, where the second network      │
│ element is a network element that provides the first    │
│ model                                                   │
└──────────────────────────────────────────────────────┘
```

FIG. 2

**EP 4 488 886 A1**

## Description

### CROSS-REFERENCE TO RELATED APPLICATION

The present invention claims priority to Chinese Patent Application No. 202210224481.9, filed with the China National Intellectual Property Administration on March 7, 2022, and entitled "MODEL ACCURACY DETERMINING METHOD AND APPARATUS, AND NETWORK-SIDE DEVICE", and Chinese Patent Application No. 202210958867.2, filed with the China National Intellectual Property Administration on August 9, 2022, and entitled "MODEL ACCURACY DETERMINING METHOD AND APPARATUS, AND NETWORK-SIDE DEVICE", both of which are incorporated herein by reference in their entireties.

### TECHNICAL FIELD

This application pertains to the field of mobile communication technologies, and specifically relates to a model accuracy determining method and apparatus, and a network-side device.

### BACKGROUND

In a communication network, some network elements are introduced to perform intelligent data analytics and generate data analytics results (analytics) (or data inference results) of some tasks. The data analytics results may assist devices inside and outside the network to make policy decisions. The purpose is to use artificial intelligence (Artificial Intelligence, AI) methods to improve intelligence of policy decisions of the devices.

A network data analytics function (Network Data Analytics Function, NWDAF) may perform AI or machine learning (Machine Learning, ML) model training based on training data to obtain a model suitable for an AI task. Based on an AI/ML model, inference is performed on inference input data of an AI task to obtain inference result data corresponding to a specific AI task. A policy control function (Policy Control Function, PCF) entity performs intelligent policy control and charging (Policy Control and Charging, PCC) based on inference result data, such as defining an intelligent user camping policy based on inference result data of a service behavior of a user to improve service experience of the user; or an access and mobility management function (Access and Mobility Management Function, AMF) performs an intelligent mobility management operation based on inference result data of an AI task, such as intelligently paging a user based on inference result data of a moving trajectory of the user to improve paging reachability.

A prerequisite for making correct and optimized policy decisions by the devices inside and outside the network based on the AI data analytics results is that correct data analytics results need to serve as a basis. If accuracy of the data analytics results is low, the data analytics results are provided as incorrect information to the devices inside and outside the network for reference, eventually resulting in incorrect policy decisions or inappropriate operations. Therefore, accuracy of the data analytics results needs to be ensured.

Although accuracy of a model in a training phase (Accuracy in Training, AiT) meets an accuracy requirement of the model, it is uncertain whether the model can also meet the accuracy requirement when the model is put into practical use for inference (Accuracy in Use, AiU). A gap may exist due to different data distributions, insufficient model generalization capabilities, and the like, leading to low accuracy of inference result data obtained by the model. When the inference result data is provided to the devices inside and outside the network for reference, the devices are likely to make incorrect policy decisions or perform inappropriate operations.

### SUMMARY

Embodiments of this application provide a model accuracy determining method and apparatus, and a network-side device to resolve a problem that accuracy of inference result data obtained by a model is low.

According to a first aspect, a model accuracy determining method is provided and applied to a first network element. The method includes:

performing, by the first network element, inference on a task based on a first model;
determining, by the first network element, first accuracy corresponding to the first model, where the first accuracy is used to indicate accuracy of the first model on an inference result of the task; and
in a case that the first accuracy reaches a preset condition, sending, by the first network element, first information to a second network element, where the first information is used to indicate that accuracy of the first model does not meet an accuracy requirement or decreases, where
the second network element is a network element that provides the first model.

According to a second aspect, a model accuracy determining apparatus is provided and includes:

an execution module, configured to perform inference on a task based on a first model;
a calculation module, configured to determine first accuracy corresponding to the first model, where the first accuracy is used to indicate accuracy of the first model on an inference result of the task; and
a transmission module, configured to send first information to a second network element in a case that the first accuracy reaches a preset condition, where the first information is used to indicate that accuracy of the first model does not meet an accuracy requirement or decreases, where
the second network element is a network element that provides the first model.

According to a third aspect, a model accuracy determining method is provided and applied to a second network element. The method includes:

receiving, by the second network element, first information from a first network element, where the first information is used to indicate that accuracy of a first model does not meet an accuracy requirement or decreases; and
retraining, by the second network element, the first model based on the first information.

According to a fourth aspect, a model accuracy determining apparatus is provided and includes:

a transceiver module, configured to receive first information from a first network element, where the first information is used to indicate that accuracy of a first model does not meet an accuracy requirement or decreases; and
a training module, configured to retrain the first model based on the first information.

According to a fifth aspect, a model accuracy determining method is provided and applied to a fourth network element. The method includes:

receiving, by the fourth network element, third information from a first network element, where the third information is used to instruct the fourth network element to store first data of a task, and the task is a task on which the first network element performs inference based on a first model, where
the first data includes at least one of the following:

inference input data corresponding to the task;
inference result data corresponding to the task; and
tag data corresponding to the task.

According to a sixth aspect, a model accuracy determining apparatus is provided and includes:

a communication module, configured to receive third information from a first network element, where the third information is used to instruct to store first data of a task, and the task is a task on which the first network element performs inference based on a first model; and
a storage module, configured to store the first data of the task, where
the first data includes at least one of the following:

inference input data corresponding to the task;
inference result data corresponding to the task; and
tag data corresponding to the task.

According to a seventh aspect, a network-side device is provided. The network-side device includes a processor and a memory. The memory stores a program or instructions executable on the processor. When the program or instructions are executed by the processor, the steps of the method according to the first aspect are implemented, or the steps of the method according to the third aspect are implemented, or the steps of the method according to the fifth aspect are implemented.

According to an eighth aspect, a model accuracy determining system is provided and includes network-side devices. The network-side devices include a first network element, a second network element, and a fourth network element. The first network element may be configured to perform the steps of the model accuracy determining method according to the first aspect. The second network element may be configured to perform the steps of the model accuracy determining method according to the third aspect. The fourth network element may be configured to perform the steps of the model accuracy determining method according to the fifth aspect.

According to a ninth aspect, a readable storage medium is provided. The readable storage medium stores a program or instructions. When the program or instructions are executed by a processor, the steps of the method according to the first aspect are implemented, or the steps of the method according to the third aspect are implemented, or the steps of the method according to the fifth aspect are implemented.

According to a tenth aspect, a chip is provided. The chip includes a processor and a communication interface. The communication interface is coupled to the processor. The processor is configured to run a program or instructions to implement the steps of the method according to the first aspect, or implement the steps of the method according to the third aspect, or implement the steps of the method according to the fifth aspect.

According to an eleventh aspect, a computer program or program product is provided. The computer program or program product is stored in a storage medium. The computer program or program product is executed by at least one processor to implement the steps of the method according to the first aspect, or implement the steps of the method according to the third aspect, or implement the steps of the method according to the fifth aspect.

In the embodiments of this application, the first network element performs inference on the task based on the first model, and determines the first accuracy corresponding to the first model; and in the case that the first accuracy reaches the preset condition, the first network element sends the first information to the second network element, where the first information is used to indicate that the accuracy of the first model does not meet the accuracy requirement or decreases. Therefore, accuracy of the model in an actual application process can be monitored, and when the accuracy decreases, a corresponding measure can be taken in time to avoid making an incorrect policy decision or performing an inappropriate operation.

## BRIEF DESCRIPTION OF DRAWINGS

FIG. 1 is a schematic structural diagram of a wireless communication system to which an embodiment of this application can be applied;

FIG. 2 is a schematic flowchart of a model accuracy determining method according to an embodiment of this application;

FIG. 3 is another schematic flowchart of a model accuracy determining method according to an embodiment of this application;

FIG. 4 is another schematic flowchart of a model accuracy determining method according to an embodiment of this application;

FIG. 5 is another schematic flowchart of a model accuracy determining method according to an embodiment of this application;

FIG. 6 is a schematic structural diagram of a model accuracy determining apparatus according to an embodiment of this application;

FIG. 7 is another schematic flowchart of a model accuracy determining method according to an embodiment of this application;

FIG. 8 is another schematic structural diagram of a model accuracy determining apparatus according to an embodiment of this application;

FIG. 9 is another schematic flowchart of a model accuracy determining method according to an embodiment of this application;

FIG. 10 is another schematic structural diagram of a model accuracy determining apparatus according to an embodiment of this application;

FIG. 11 is a schematic structural diagram of a communication device according to an embodiment of this application; and

FIG. 12 is a schematic structural diagram of a network-side device for implementing an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, a 5th generation mobile communication technology (5th Generation Mobile Communication Technology, 5G) system is described for an illustrative purpose, and 5G terms are used in most of the following descriptions. These technologies may also be applied to other applications than a 5G system application, for example, a 6th Generation (6th Generation, 6G) communication system.

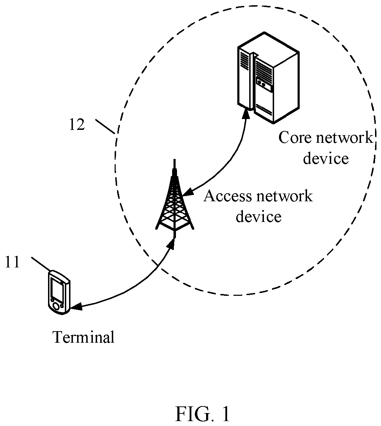

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device 12 may also be referred to as a radio access network device, a radio access network (Radio Access Network, RAN), a radio access network function, or a radio access network element. The access network device 12 may include a base station, a wireless local area network (Wireless Local Area Network, WLAN) access point, a Wireless Fidelity (Wireless Fidelity, Wi-Fi) node, or the like. The base station may be referred to as a NodeB, an evolved NodeB (Evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in a 5G system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in the embodiments of this application, only a core network device in the 5G system is used as an example for description, but a specific type of the core network device is not limited.

A model accuracy determining method and apparatus, and a network-side device provided in embodiments of this application are hereinafter described in detail by using some embodiments and application scenarios thereof with reference to the accompanying drawings.

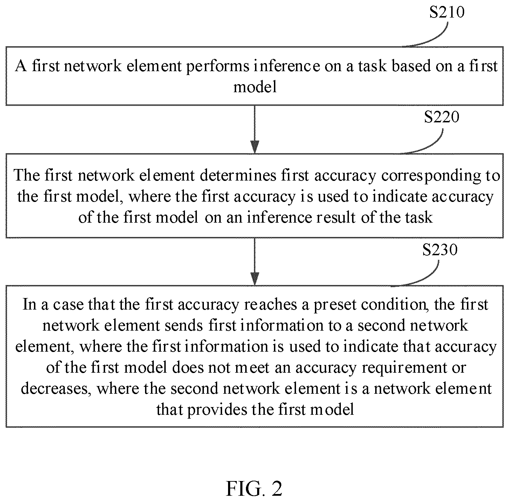

As shown in FIG. 2, an embodiment of this application provides a model accuracy determining method. The method is performed by a first network element, and the first network element includes a model inference function network element. In other words, the method may be performed by software or hardware installed in the first network element. The method includes the following steps.

S210. The first network element performs inference on a task based on a first model.

In an implementation, the first network element may be a network element having both a model inference function and a model training function. For example, the first network element is an NWDAF, and the NWDAF may include an analytics logical function network element (Analytics Logical Function, AnLF) and a model training logical network element (Model Training Logical Function, MTLF).

In another implementation, the first network element includes a network element with a model inference function, and a second network element includes a network element with a model training function. For example, the first network element is an AnLF, and the second network element is an MTLF.

If the NWDAF is used as the first network element, the second network element and the first network element in the following embodiments may be a same network element, that is, the MTLF and the AnLF are combined into the NWDAF.

It should be understood that the first model such as an AI/MI, model may be constructed and trained based on an actual requirement. The MTLF collects training data and performs model training based on the training data. After the training is completed, the MTLF sends information of the trained first model to the AnLF.

After determining a triggered task, the AnLF performs inference on the task based on the first model to obtain inference result data.

It should be understood that the task is a data analytics task used to indicate a task type rather than a single task. After triggering the task, the AnLF may determine, based on identification information (Analytics ID) of the task, the first model corresponding to the task, and then perform inference on the task based on the corresponding first model to obtain the inference result data. For example, if the analytics ID of the task = UE mobility, which is used to predict a moving trajectory of a terminal (also known as user equipment (User Equipment, UE)), the AnLF may perform inference on the task based on the first model corresponding to UE mobility, and obtained inference result data is predicted terminal location (UE location) information.

The AnLF may perform inference on the task based on the first model for one or more times to obtain a plurality of pieces of inference result data, or inference result data including a plurality of output result values.

In an implementation, the performing inference on the task by the AnLF may be triggered by a third network element by sending a task request message. The third network element is a network element that triggers the task. The third network element may include a consumer network element (consumer Network Function, consumer NF). The consumer network element may be a network element of a 5G system, or a terminal or a third-party application function (Application Function, AF), or the like.

In another implementation, the task may also be actively triggered by the AnLF. For example, a verification testing phase is set, and in the verification testing phase, the AnLF actively simulates triggering of the task to test accuracy of the first model.

For simplicity, the following embodiments are all described by using an example in which the AnLF is the first network element, the MTLF is the second network element, and the consumer NF is the third network element.

S220. The first network element determines first accuracy corresponding to the first model, where the first accuracy is used to indicate accuracy of the first model on an inference result of the task.

After performing inference on the task, the AnLF calculates the first accuracy corresponding to the first model in the inference process, where the first accuracy is AiU. The first accuracy may be calculated in a plurality of manners, and this embodiment of this application provides only one specific implementation. Step S220 includes:

the first network element obtains, based on the first model, inference result data corresponding to the task;
the first network element obtains tag data corresponding to the inference result data, where the tag data may be obtained from a source device of the tag data, and in an implementation, the tag data refers to a ground truth (ground truth), that is, facts and data that have actually occurred; and
the first network element calculates the first accuracy of the first model based on the inference result data and the tag data, and may specifically determine the number of correct results in the inference result data by comparing the inference result data with the corresponding tag data, and use the number of correct results divided by the total number as the first accuracy. The formula is expressed as follows:

$$\text{First accuracy} = \text{Number of correct results} \div \text{Total number}.$$

The correct result may indicate that the inference result data is consistent with the tag data, or that a difference between the inference result data and the tag result data is within an allowable range.

The first accuracy may be expressed in various forms. The first accuracy is not limited to a specific percentage value, such as 90%, but may also be expressed in a classified form, such as high, medium, or low, or normalized data, such as 0.9.

The first accuracy in this embodiment of this application may indicate the accuracy of the first model on the inference result of the task from a positive or negative perspective. In an implementation, the first accuracy can be used to indicate at least one of the following:

correctness of the inference result of the task, where for example, the accuracy of the first model may be positively indicated by calculating correctness of the first model on the inference result of the task; and
deviation of the inference result of the task, where for example, the accuracy of the first model may be negatively indicated by calculating deviation or an inference error of the first model on the inference result of the task, and the inference error may be calculated by using various methods, such as a mean absolute error (Mean Absolute Error, MAE), or a mean square error (Mean Square Error, MSE).

In an implementation, that the first network element obtains tag data corresponding to the inference result data includes:

the first network element determines a source device of tag data corresponding to the task; and
the first network element obtains the tag data from the source device.

The source device of the tag data may be determined by the AnLF based on output data type information of the first model, constraint condition information and object information of the task, and the like.

It should be noted that step S220 may be triggered by various conditions. A trigger condition may be preset by the AnLF, or may be obtained from the MTLF, for example, obtained by sending a model performance subscription request (Performance Monitoring) to the AnLF.

S230. In a case that the first accuracy reaches a preset condition, the first network element sends first information to the second network element, where the first information is used to indicate that accuracy of the first model does not meet an accuracy requirement or decreases, where the second network element is a network element that provides the first model.

The AnLF determines, based on whether the first accuracy reaches the preset condition, whether the accuracy of the first model meets the accuracy requirement or decreases. The preset condition may include that the first accuracy is less than a preset threshold or decreases to some extent.

When the AnLF determines that the accuracy of the first model does not meet the accuracy requirement or decreases, the AnLF sends the first information to the MTLF that provides the first model, to notify the MTLF that the accuracy of the first model does not meet the accuracy requirement or decreases.

In an implementation, the first network element may also send the first information to the second network element based on a trigger event, where the trigger event may include: the first network element completes calculation of the first accuracy, or a specific time is reached.

In another implementation, the first network element may also send the first information to the second network element based on a preset period.

It should be noted that, in a case that the first information is sent to the second network element based on the trigger event or based on the preset period, the first information may be used to indicate at least one of the following:

the accuracy of the first model;
the accuracy of the first model meets the accuracy requirement; and
the accuracy of the first model does not meet the accuracy requirement or decreases.

After receiving the first information, the MTLF may determine subsequent operations based on the first information. For example, the MTLF may retrain the first model, or reselect another model that can be used for performing inference on the task and send the model to the AnLF. When selecting other models, the MTLF may require that the other models should meet a condition, where the condition may include at least one of the following: second accuracy of the other models is higher than second accuracy of the first model; second accuracy of the other models is higher than the first accuracy of the first model; and model performance requirements of the other models are higher than a model performance requirement of the first model.

Before step S230, the method further includes:

the first network element receives a model performance subscription request from the second network element, where the model performance subscription request is used to request the first network element to monitor the accuracy of the first model.

It should be noted that the first network element may also receive the model performance subscription request from the second network element before step S210 or S220.

Correspondingly, the first network element may send a model performance subscription response message (Model Performance Monitoring Notification) to the second network element based on the model performance subscription request, where the model performance subscription response message may carry the first information.

As can be learned from the technical solution of the foregoing embodiment, in this embodiment of this application, the first network element performs inference on the task based on the first model, and determines the first accuracy corresponding to the first model; and in the case that the first accuracy reaches the preset condition, the first network element sends the first information to the second network element, where the first information is used to indicate that the accuracy of the first model does not meet the accuracy requirement or decreases. Therefore, accuracy of the model in an actual application process can be monitored, and when the accuracy decreases, a corresponding measure can be taken in time to avoid making an incorrect policy decision or performing an inappropriate operation.

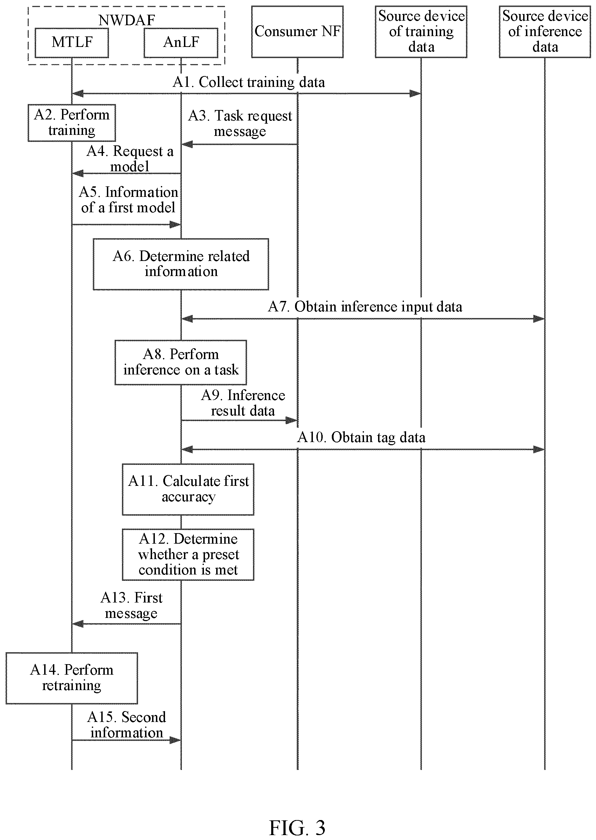

Based on the foregoing embodiment, further, as shown in FIG. 3, the model accuracy determining method includes the following steps.

The MTLF pre-trains the first model, and the training process may include steps A1 and A2.

Step A1: The MTLF collects training data from a source device of the training data.

Step A2: The MTLF trains the first model based on the training data.

Step A5: After completing the training of the first model, the MTLF may send information of the trained first model to the AnLF.

In an implementation, a specific message carrying the information of the first model may be an Nnwdaf_MLModelProvision_Notify or Nnwdaf_MLModelInfo_Response message.

In an implementation, before step A5, the method further includes:

Step A4: The AnLF sends a message for requesting a model to the MTLF.

In an implementation, in a training phase of the first model or a testing phase after training in step A2, the MTLF needs to evaluate the accuracy of the first model and calculate the second accuracy of the first model, that is, AiT. The second accuracy may be obtained by using the same calculation formula as the first accuracy. Specifically, the MTLF may set a verification data set for evaluating the second accuracy of the first model, where the verification data set includes input data and corresponding tag data used for the first model. The MTLF inputs the input data into the trained first model to obtain output data, then compares whether the output data is consistent with the tag data, and then calculates the second accuracy of the first model according to the foregoing formula.

Correspondingly, in an implementation, when sending the information of the first model to the AnLF in step A5, the MTLF may also simultaneously send the second accuracy of the first model, or send the second accuracy of the first model to the AnLF by using a separate message.

In an implementation, the message for requesting the model may include requirement information of the AnLF on the first model, such as a model performance requirement, a model description format or language requirement, a manufacturer requirement, a timeliness requirement, an area requirement, and a model size requirement. The model performance requirement may be a requirement on the second accuracy of the first model.

Correspondingly, in an implementation, when the MTLF sends the information of the first model to the AnLF in step A5, the MTLF may also simultaneously send information related to the first model and corresponding to the requirement information, such as the second accuracy, the model description format or language, model timeliness information, applicable area information, and model size information.

In an implementation, if the task is triggered by the third network element, before step A4, the method further includes:

Step A3: The consumer NF sends a task request message to the AnLF, where the task request message is used to request to perform inference on the task, thereby triggering the AnLF to perform an inference process on the task based on the first model corresponding to the task.

The task request message includes description information of the task, where the description information of the task may be diversified and may include identification information of the task, the constraint condition information of the task (Analytics Filter Information), the object information of the task (Analytics Target), and the like. An object and a range involved in the task may be determined based on the description information of the task.

The constraint condition information of the task is used to limit a range of execution of the task, and may include a time range, an area range, and the like.

The object information of the task is used to indicate the object for which the task is intended, for example, a terminal identifier (UE ID), a terminal group identifier (UE group ID), or any terminal (any UE).

The AnLF may request the model from the MTLF based on the task request message, and obtain the information of the first model and the second accuracy of the first model from the MTLF.

In an implementation, steps A1 and A2 may follow step A4, that is, after receiving the message sent by the AnLF for requesting the model, the MTLF trains the first model corresponding to the task and sends the message of the trained first model to the AnLF.

In an implementation, as shown in FIG. 3, step S210 includes steps A6 to A8.

Step A6: The AnLF determines at least one of the following related information based on the received task request message:

the first model corresponding to the task;

input data type information of the first model;
the output data type information of the first model;
a source device of inference input data corresponding to the task; and
the source device of the tag data corresponding to the task.

For the first model corresponding to the task, the first model to be used by the task may be determined by a task type indicated by the analytics ID in the task request message; or may be determined by a mapping relationship between the analytics ID and the first model, where the first model may be represented by the identification information (model ID) of the model, such as model 1.

The input data type information of the first model may also be referred to as metadata (metadata) information of the model. For example, the input data may include the terminal identifier (UE ID), a time, and a current service status of the terminal.

The output data type information of the first model includes a data type (data type), for example, a tracking area (Tracking Area, TA) or a cell (cell) used to indicate a UE location.

For the source device of the inference input data corresponding to the task, the AnLF may specifically determine, based on information such as the analytics filter information and analytics target in the task request message, the object and range involved in the task, and then determine, based on the object and range and metadata information, a network element that can obtain the inference input data corresponding to the task, as the source device of the inference input data corresponding to the task.

For the source device of the tag data corresponding to the task, the AnLF may specifically determine, based on the output data type information of the first model, a network element device type (Network Functions Type, NF type) that can provide the output data, then determine, based on the constraint condition information and object information of the task, a specific network element instance (instance) corresponding to the network element device type, and use the network element instance as the source device of the tag data. For example, based on a data type of the output data of the first model corresponding to the task: UE mobility = UE location, the AnLF determines that the network element device type AMF type can provide data of the UE location; and then based on the constraint condition information AOI of the task and the like, and the object UE 1 of the task, the AnLF queries a corresponding AMF instance AMF 1 from a unified data management entity (Unified Data Management, UDM) or a network repository function (Network Repository Function, NRF), so that the AnLF uses AMF 1 as the source device of the tag data and subsequently obtains the tag data of the UE location from AMF 1.

Step A7: The AnLF obtains the inference input data corresponding to the task. Specifically, the AnLF may send a request message for the inference input data based on the source device of the inference input data of the task that is determined in step A6 to collect the inference input data corresponding to the task.

Step A8: The AnLF performs, based on the obtained first model, inference on the inference input data corresponding to the task to obtain the inference result data.

For example, the AnLF performs, based on the first model corresponding to the analytics ID = UE mobility, inference on the inference input data corresponding to the task, for example, values such as the UE ID, time, and current service status of the UE, and obtains the inference result data that is output data of the UE location.

In an implementation, after the inference result data corresponding to the task is obtained based on the first model, the method further includes:

Step A9: The first network element sends the inference result data to the third network element, that is, the AnLF sends the inference result data obtained through inference to the consumer NF.

The inference result data may be used to notify the consumer NF of a statistical or predicted value obtained by the first model corresponding to the analytics ID through inference, to assist the consumer NF in executing a corresponding policy decision. For example, the statistical or predicted value corresponding to UE mobility may be used to assist the AMF in optimizing user paging.

In an implementation, a specific message carrying the inference result data may be an Nnwdaf_AnalyticsSubscription_Notify or Nnwdaf_AnalyticsInfo_Response message.

Step A10: The AnLF obtains the tag data corresponding to the inference result data.

In an implementation, a specific message carrying the tag data may be an Nnf_ EventExposure_Subscribe message.

Specifically, the AnLF may send a request message for tag data to the source device of the tag data that is determined in step A6, where the request message includes type information of the tag data, object information corresponding to the tag data, time information (such as a timestamp and a time period), and the like, and is used to determine which tag data is to be fed back to the source device of the tag data.

The type information of the tag data, the object information corresponding to the tag data, the time information, and the like in the request message for the tag data may be determined by the AnLF based on the output data type information of the first model, the object information of the task, the constraint condition information of the task, and the like respectively. Specifically, based on the output data type information of the first model, the AnLF determines the type information of the tag data to be obtained; based on the object information of the task, the AnLF determines the object information of the tag data to be obtained; and if the AnLF determines, based on the constraint condition information of the task, that the inference process of the task is statistical calculation performed for a time in the past or prediction performed for a time in the future, the AnLF further needs to obtain tag data corresponding to the time in the past or the time in the future.

For example, the AnLF sends a request message for tag data to the AMF or a location management function (Location Management Function, LMF), where the request message carries the data type corresponding to the tag data = UE location, object information = UE 1, and time information = a specific time period, and is used to request the AMF or the LMF to feed back data of the UE location of UE 1 in a specific time period.

It should be understood that if the AnLF obtains a plurality of pieces of inference result data by performing one or more inference processes in step A8, correspondingly, the AnLF needs to obtain a plurality of pieces of tag data corresponding to the plurality of pieces of inference result data.

In an implementation, as shown in FIG. 3, step S220 includes steps A11 and A12.

Step A11: The AnLF calculates the first accuracy of the first model based on the inference result data and the tag data.

Step A12: The AnLF determines whether the first accuracy meets the preset condition, and performs step A13 in a case that the first accuracy meets the AnLF.

The preset condition may be set based on an actual requirement. In an implementation, the preset condition includes at least one of the following conditions that:

the first accuracy is lower than a first threshold;
the first accuracy is lower than the second accuracy; and
the first accuracy is lower than the second accuracy, and a difference between the first accuracy and the second accuracy is greater than a second threshold.

The first threshold may be obtained in various manners. The first threshold may be set by the AnLF, or may be set by the MTLF and then sent to the AnLF as a determining condition or a trigger condition.

In an implementation, the MTLF sets the first threshold as a model performance requirement value (Model Performance Requirement) required when the AnLF requests the first model.

In another implementation, the first threshold may be sent together with the information of the first model when the second network element sends the information of the first model to the first network element.

In another implementation, the first threshold may be carried by the model performance subscription message sent by the second network element to the first network element.

In an implementation, as shown in FIG. 3, step S230 includes step A13.

Step A13: The AnLF sends first information to the MTLF, where the first information is used to notify the MTLF that the accuracy of the first model does not meet the accuracy requirement or decreases.

In an implementation, the first information may be specifically sent by using an Nnwdaf_Analytics Subscription_Notify message.

In another implementation, the AnLF may also send the first information to the MTLF by using a Model Performance Monitoring Notification.

In another implementation, the first information may also be used to request the MTLF to retrain the first model or to re-request a model. In this case, the first information may be specifically sent by using an Nnwdaf_MLModelProvision_Subscribe or Nnwdaf_MLModelInfo_Request message.

In an implementation, the first information includes at least one of the following:

the identification information of the first model, for example, the model ID;
the identification information of the task, for example, the analytics ID;
the constraint condition information of the task, used to indicate the range involved in the first information, that is, the object and range of the task involved when the accuracy of the first model does not meet the accuracy requirement or decreases, including: the time range, area range, object range, and the like;
information indicating that the accuracy of the first model does not meet the accuracy requirement or decreases;
the first accuracy;
request indication information for retraining the first model, used to instruct the MTLF to retrain the first model;
indication information for re-requesting the model, used to request to obtain the model corresponding to the task; and
first data of the task, where the first data is used to retrain the first model.

In an implementation, the first data includes at least one of the following:

inference input data corresponding to the task;
output result data corresponding to the task; and
tag data corresponding to the task.

Step A14: The MTLF may enter a process of retraining the first model based on the first information. The specific training process is basically the same as the training process in step A2, except that the training data may include the first data of the task. The process of retraining the first model may be retraining an initialized first model based on the training data, or training the current first model based on the training data to implement a fine adjustment of the first model, thereby achieving faster convergence and saving resources.

In an implementation, after the MTLF completes retraining of the first model, the method further includes:
Step A15: The first network element receives second information from the second network element, where the second information includes information of the retrained first model, that is, the MTLF sends the information of the retrained first model to the AnLF, so that the AnLF resumes inference on the task.

In an implementation, the second information further includes at least one of the following:
condition information applicable to the retrained first model, where the applicable condition information may include a time range, an area range, and an object range for which the first model is intended; and
third accuracy of the retrained first model, that is, AiT of the retrained first model, where the third accuracy is used to indicate accuracy of a model output result presented by the retrained first model in the training phase or the testing phase.

In another implementation, after step A14, the method further includes:
the MTLF sends the information of the retrained first model to a sixth network element, where the sixth network element is a network element that needs to use the first model for inference, and the sixth network element includes a model inference function network element.

This means that, after completing the retraining of the first model, the MTLF may further send the retrained first model to another AnLF in need of the model, and the other AnLF uses the first model.

As can be learned from the technical solution of the foregoing embodiment, in this embodiment of this application, in the case that the first accuracy reaches the preset condition, the first network element sends the first information to the second network element to indicate that the accuracy of the first model does not meet the accuracy requirement or decreases, so that the second network element retrains the first model. Therefore, when the accuracy of the model decreases, the first model can be retrained in time, and accuracy of inference on the task can be quickly restored, to avoid making an incorrect policy decision or performing an inappropriate operation.

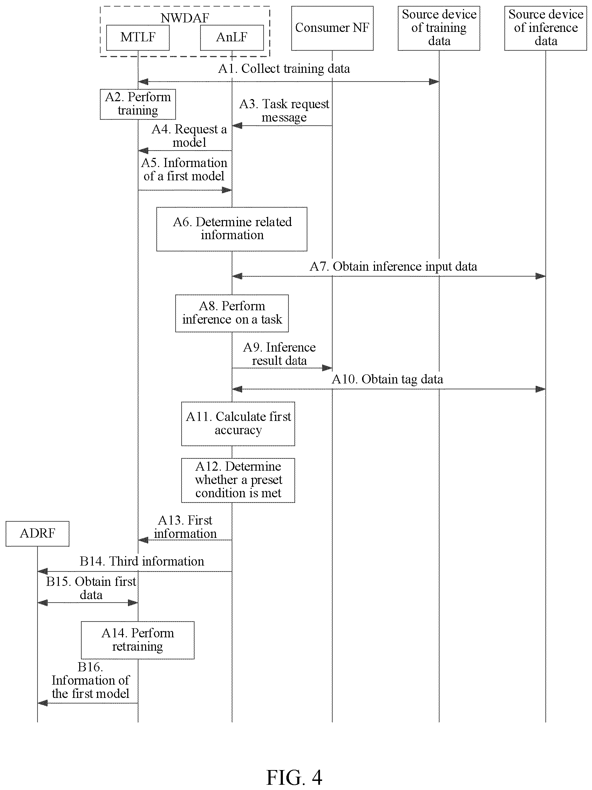

Based on the foregoing embodiment, further, as shown in FIG. 4, the method further includes:
Step B 14: The first network element sends third information to a fourth network element, where the third information is used to instruct the fourth network element to store the first data of the task, and the fourth network element is a network element that receives and stores the first data from the first network element.

The AnLF may store the first data in the fourth network element. The fourth network element includes a storage network element, which may be an analytics data repository function (Analytics Data Repository Function, ADRF).

In an implementation, the third information includes at least one of the following:

the identification information of the task;
the constraint condition information of the task;
the object information of the task;
the inference input data corresponding to the task;
the inference result data corresponding to the task;
the tag data corresponding to the task; and
storage cause information, for example, the accuracy of the first model does not meet the accuracy requirement or decreases.

Correspondingly, in step A13, the first information sent by the AnLF to the MTLF further includes information of the fourth network element, such as identification information of the ADRF.

Step B 15: The MTLF obtains the first data from the ADRF based on the first information. Specifically, the MTLF may send data request information for the first data to the ADRF to indicate a range of data requested to be obtained, where the data request information includes at least one of the following information:

the identification information of the task;
the constraint condition information of the task;
the object information of the task;

the identification information of the first model;
the input data type information of the first model; and
the output data type information of the first model.

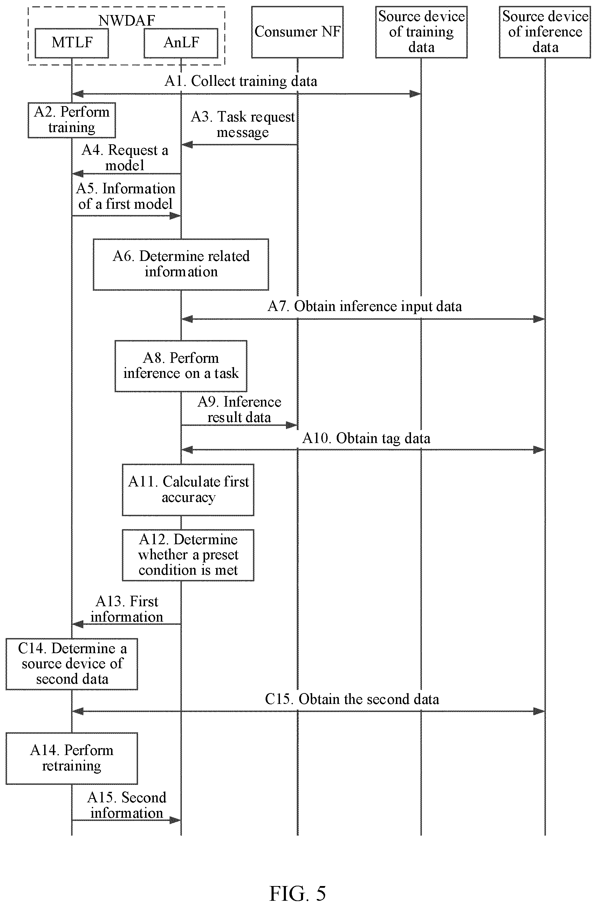

In an implementation, the data request information may further include a request cause. For example, the first model needs to be retrained, or the accuracy of the first model does not meet the accuracy requirement or decreases.
In an implementation, the fourth network element may be further configured to store the information of the first model. After step A14, the method further includes:
Step B16: The second network element stores the information of the retrained first model in the fourth network element.
The fourth network element may further store condition information applicable to the retrained first model and the third accuracy of the retrained first model.
The AnLF may obtain the information of the retrained first model from the fourth network element based on an actual requirement.
As can be learned from the technical solution of the foregoing embodiment, in this embodiment of this application, the fourth network element stores the first data of the task, so that when the accuracy of the model decreases, related data corresponding to the task can be stored in time, for retraining the first model. Therefore, the first model can be updated in time, and accuracy of inference on the task can be quickly restored, to avoid making an incorrect policy decision or performing an inappropriate operation.
Based on the foregoing embodiment, further, as shown in FIG. 5, step A14 includes:

the second network element obtains second data of the first model based on the first information, where the second data is training data for retraining the first model; and
the second network element retrains the first model based on the second data.

In an implementation, that the second network element obtains second data of the first model based on the first information includes:

Step C14: The second network element determines a source device of the second data of the first model, that is, a source device of inference data as shown in FIG. 3.
Step C15: The second network element obtains the second data from the source device.

In an implementation, step C15 includes: the second network element sends data request information to the source device, where the data request information is used to request the source device to provide the second data, where the data request information includes at least one of the following information:

the identification information of the task;
the constraint condition information of the task;
the identification information of the first model;
the input data type information of the first model; and
the output data type information of the first model.

In an implementation, the source device of the second data is determined by at least one of the following:

the identification information of the task;
the constraint condition information of the task;
the object information of the task;
the identification information of the first model;
the input data type information of the first model; and
the output data type information of the first model.

In an implementation, the second data includes the first data of the task, that is, may include the inference input data, the inference result data, and the tag data corresponding to the task.
As can be learned from the technical solution of the foregoing embodiment, in this embodiment of this application, the second network element autonomously obtains, based on the first information, the second data of the first model from the source device of the second data, for retraining the first model. Therefore, the first model can be updated in time, and accuracy of inference on the task can be quickly restored, to avoid making an incorrect policy decision or performing an inappropriate operation.
Based on the foregoing embodiment, further, in the case that the first accuracy reaches the preset condition, the method further includes:

the first network element requests to obtain a second model from a fifth network element, where the second model is a model provided by the fifth network element and used for the task. For a specific process, refer to steps A4 and A5. The fifth network element includes a model training function network element, that is, the fifth network element may be other MTLFs than the second network element.

The first network element performs inference on the task based on the second model to obtain new inference result data of the task. In this case, the task on which reference is performed may be a task triggered by the consumer NF by sending the task request message in step A3, or a task triggered by the consumer NF by resending the task request message.

As can be learned from the technical solution of the foregoing embodiment, in this embodiment of this application, in the case that the first accuracy reaches the preset condition, the second model is obtained from the fifth network element to perform inference on the task to obtain the new inference result data. Therefore, when the accuracy of the model decreases, a corresponding measure can be taken in time to perform an adjustment, and accuracy of inference on the task can be quickly restored, to avoid making an incorrect policy decision or performing an inappropriate operation.

Based on the foregoing embodiment, further, in the case that the first accuracy reaches the preset condition, the method further includes:

the first network element sends fourth information to the third network element, where the fourth information is used to indicate that the accuracy of the first model does not meet the accuracy requirement or decreases.

In an implementation, the fourth information includes at least one of the following:

all or a part of the description information of the task, used to indicate the task on which inference is performed by using the first model, which may specifically include the analytics ID, analytics filter information, analytics target, and the like;

information indicating that the accuracy of the first model does not meet the accuracy requirement or decreases; the first accuracy;

recommended operation information, used to recommend to the consumer NF an operation to be performed after the first information is received; and

waiting time information, where the waiting time information is used to indicate a time required for the first network element to resume inference on the task, and specifically may be a waiting time required for the AnLF to obtain the retrained first model and perform inference to obtain inference result data, or a waiting time required for the AnLF to obtain the second model that can be used for performing the task and perform inference to obtain inference result data.

In an implementation, the recommended operation information includes at least one of the following operations: continuing to use the inference result data corresponding to the task, that is, instructing the consumer NF to continue to use the obtained inference result data;

stopping using the inference result data corresponding to the task, that is, instructing the consumer NF to stop using the obtained inference result data; and

re-triggering the task to obtain new inference result data, that is, instructing the consumer NF to resend the task request message.

After receiving the first information, the consumer NF may perform step A14 to perform a corresponding operation based on the first information.

Specifically, the consumer NF may perform at least one of the following operations based on the first information:

continuing to use the inference result data corresponding to the task, where this operation may be performed when the first accuracy decreases less and the decrease does not exceed a preset amplitude threshold, such as a second threshold, and in an implementation, if the inference result data corresponding to the task continues to be used, a weight of the inference result data for making a policy decision may be appropriately reduced;

stopping using the inference result data corresponding to the task, where this operation may be performed when the first accuracy decreases significantly and the decrease exceeds a preset amplitude threshold;

resending the task request message to the first network element, for re-requesting the first network element to perform inference on the task; and

resending the task request message to a seventh network element, for requesting the seventh network element to perform inference on the task, where the seventh network element includes a model inference function network element, that is, the consumer NF may send the task request message to other AnLFs than the first network element.

As can be learned from the technical solution of the foregoing embodiment, in this embodiment of this application, in the case that the first accuracy reaches the preset condition, the fourth information is sent to the third network element, where the fourth information is used to indicate that the accuracy of the first model does not meet the accuracy requirement or decreases, so that the third network element performs a corresponding operation. Therefore, accuracy of the model in an actual application process can be monitored, and when the accuracy decreases, the third network element is notified in time, to take a corresponding measure to avoid making an incorrect policy decision or performing an inappropriate operation.

The model accuracy determining method provided in this embodiment of this application may be performed by a model accuracy determining apparatus. A model accuracy determining apparatus provided in an embodiment of this application is described by assuming that the model accuracy determining method is performed by the model accuracy determining apparatus in this embodiment of this application.

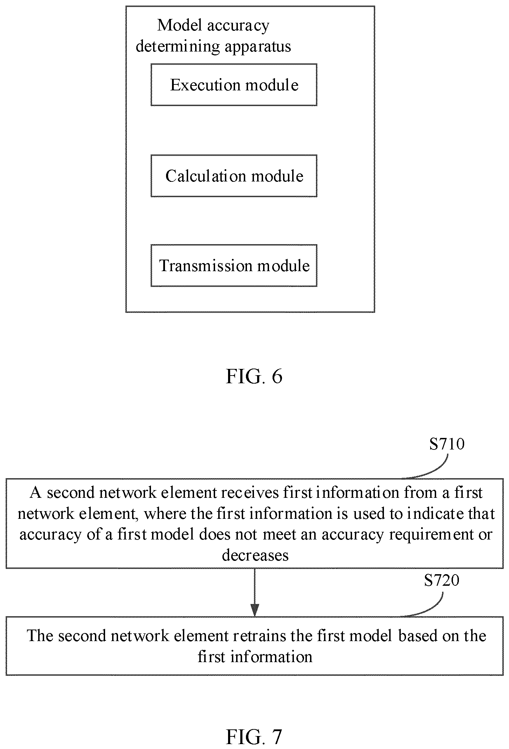

As shown in FIG. 6, the model accuracy determining apparatus includes an execution module 601, a calculation module 602, and a transmission module 603.

The execution module 601 is configured to perform inference on a task based on a first model; the calculation module 602 is configured to determine first accuracy corresponding to the first model, where the first accuracy is used to indicate accuracy of the first model on an inference result of the task; and the transmission module 603 is configured to send first information to a second network element in a case that the first accuracy reaches a preset condition, where the first information is used to indicate that accuracy of the first model does not meet an accuracy requirement or decreases, where the second network element is a network element that provides the first model.

Further, the model accuracy determining apparatus includes a model inference function network element.

Further, the second network element includes a model training function network element.

Further, the transmission module 603 is further configured to receive a model performance subscription request from the second network element, where the model performance subscription request is used to request to monitor the accuracy of the first model.

Further, the transmission module 603 is configured to obtain, based on the first model, inference result data corresponding to the task; and obtain tag data corresponding to the inference result data.

The calculation module 602 is configured to calculate the first accuracy of the first model based on the inference result data and the tag data.

Further, the first accuracy can be used to indicate at least one of the following:

correctness of the inference result of the task; and
deviation of the inference result of the task.

This embodiment of this application can implement the method embodiment shown in FIG. 2, with the same technical effect achieved. To avoid repetition, details are not described herein again.

As can be learned from the technical solution of the foregoing embodiment, in this embodiment of this application, inference is performed on the task based on the first model, and the first accuracy corresponding to the first model is determined; and in the case that the first accuracy reaches the preset condition, the first information is sent to the second network element, where the first information is used to indicate that the accuracy of the first model does not meet the accuracy requirement or decreases. Therefore, accuracy of the model in an actual application process can be monitored, and when the accuracy decreases, a corresponding measure can be taken in time to avoid making an incorrect policy decision or performing an inappropriate operation.

Based on the foregoing embodiment, further, after sending the first information to the second network element, the transmission module is further configured to receive second information from the second network element, where the second information includes information of the retrained first model.

Further, the first information includes at least one of the following:

identification information of the first model;
identification information of the task;
constraint condition information of the task;
information indicating that the accuracy of the first model does not meet the accuracy requirement or decreases;
the first accuracy;
request indication information for retraining the first model;
indication information for re-requesting a model, used to request to obtain a model corresponding to the task, where the model may be the retrained first model or another model that can be used to perform inference on the task;
first data of the task, where the first data is used to retrain the first model; and
information of a fourth network element, where the fourth network element is a network element that receives and stores the first data from a first network element.

Further, the first data includes at least one of the following:

inference input data corresponding to the task;
output result data corresponding to the task; and
tag data corresponding to the task.

Further, the second information further includes at least one of the following:

condition information applicable to the retrained first model; and
third accuracy of the retrained first model, where the third accuracy is used to indicate accuracy of a model output result presented by the retrained first model in a training phase or a testing phase.

Further, the transmission module is configured to:

determine a source device of tag data corresponding to the task; and
obtain the tag data from the source device.

Further, after obtaining, based on the first model, the inference result data corresponding to the task, the transmission module is further configured to send, by the first network element, the inference result data to a third network element, where the third network element is a network element that triggers the task.
Further, the preset condition includes at least one of the following conditions that:

the first accuracy is lower than a first threshold;
the first accuracy is lower than second accuracy; and
the first accuracy is lower than the second accuracy, and a difference between the first accuracy and the second accuracy is greater than a second threshold, where
the second accuracy is used to indicate accuracy of a model output result presented by the first model in a training phase or a testing phase.

Further, the third network element includes a consumer network element.
This embodiment of this application can implement the method embodiment shown in FIG. 3, with the same technical effect achieved. To avoid repetition, details are not described herein again.
As can be learned from the technical solution of the foregoing embodiment, in this embodiment of this application, in the case that the first accuracy reaches the preset condition, the first information is sent to the second network element to indicate that the accuracy of the first model does not meet the accuracy requirement or decreases, so that the second network element retrains the first model. Therefore, when the accuracy of the model decreases, the first model can be retrained in time, and accuracy of inference on the task can be quickly restored, to avoid making an incorrect policy decision or performing an inappropriate operation.
Based on the foregoing embodiment, further, the transmission module is further configured to send, by the first network element, third information to a fourth network element, where the third information is used to instruct the fourth network element to store first data of the task.
Further, the third information includes at least one of the following:

identification information of the task;
constraint condition information of the task;
object information of the task;
inference input data corresponding to the task;
inference result data corresponding to the task;
tag data corresponding to the task; and
storage cause information.

Further, the fourth network element includes a storage network element.
This embodiment of this application can implement the method embodiment shown in FIG. 4, with the same technical effect achieved. To avoid repetition, details are not described herein again.
As can be learned from the technical solution of the foregoing embodiment, in this embodiment of this application, the fourth network element stores the first data of the task, so that when the accuracy of the model decreases, related data corresponding to the task can be stored in time, for retraining the first model. Therefore, the first model can be updated in time, and accuracy of inference on the task can be quickly restored, to avoid making an incorrect policy decision or performing an inappropriate operation.

Based on the foregoing embodiment, further, in the case that the first accuracy reaches the preset condition, the transmission module is further configured to request to obtain a second model from a fifth network element, where the second model is a model provided by the fifth network element and used for the task; and

the execution module is configured to perform inference on the task based on the second model.

Further, the fifth network element includes a model training function network element.

This embodiment of this application can implement the foregoing method embodiment, with the same technical effect achieved. To avoid repetition, details are not described herein again.

As can be learned from the technical solution of the foregoing embodiment, in this embodiment of this application, the second network element autonomously obtains, based on the first information, second data of the first model from a source device of the second data, for retraining the first model. Therefore, the first model can be updated in time, and accuracy of inference on the task can be quickly restored, to avoid making an incorrect policy decision or performing an inappropriate operation.

Based on the foregoing embodiment, further, in the case that the first accuracy reaches the preset condition, the method further includes:

the first network element sends fourth information to a third network element, where the fourth information is used to indicate that the accuracy of the first model does not meet the accuracy requirement or decreases.

Further, the fourth information includes at least one of the following:

all or a part of description information of the task;
information indicating that the accuracy of the first model does not meet the accuracy requirement or decreases;
the first accuracy;
recommended operation information; and
waiting time information, where the waiting time information is used to indicate a time required for the first network element to resume inference on the task.

This embodiment of this application can implement the foregoing method embodiment, with the same technical effect achieved. To avoid repetition, details are not described herein again.

As can be learned from the technical solution of the foregoing embodiment, in this embodiment of this application, in the case that the first accuracy reaches the preset condition, the fourth information is sent to the third network element, where the fourth information is used to indicate that the accuracy of the first model does not meet the accuracy requirement or decreases, so that the third network element performs a corresponding operation. Therefore, accuracy of the model in an actual application process can be monitored, and when the accuracy decreases, the third network element is notified in time, to take a corresponding measure to avoid making an incorrect policy decision or performing an inappropriate operation.

The model accuracy determining apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The model accuracy determining apparatus provided in this embodiment of this application can implement each process implemented in the method embodiments in FIG. 2 to FIG. 5, with the same technical effect achieved. To avoid repetition, details are not described herein again.

As shown in FIG. 7, an embodiment of this application further provides another model accuracy determining method. The method is performed by a second network element, and the second network element includes a model training function network element. In other words, the method may be performed by software or hardware installed in the second network element. The method includes the following steps.

S710. The second network element receives first information from a first network element, where the first information is used to indicate that accuracy of a first model does not meet an accuracy requirement or decreases.

Further, before step S710, the method further includes:

the second network element sends a model performance subscription request to the first network element, where the model performance subscription request is used to request the first network element to monitor the accuracy of the first model.

S720. The second network element retrains the first model based on the first information.

Further, the first network element includes a model inference function network element.

Further, the second network element includes a model training function network element.

Further, the second network element sends second information to the first network element, where the second information includes information of the retrained first model.

Further, the first information includes at least one of the following:

identification information of the first model;
identification information of a task, where the task is a task on which the first network element performs inference based on the first model;
constraint condition information of the task;
information indicating that the accuracy of the first model does not meet the accuracy requirement or decreases;
first accuracy, where the first accuracy is used to indicate accuracy of the first model on an inference result of the task;
request indication information for retraining the first model;
indication information for re-requesting a model, used to request to obtain a model corresponding to the task;
first data of the task, where the first data is used to retrain the first model; and
information of a fourth network element, where the fourth network element is a network element that receives and stores the first data from the first network element.

Further, step S720 includes:
the second network element obtains second data of the first model based on the first information; and
the second network element retrains the first model based on the second data.

Further, the second information further includes at least one of the following:

condition information applicable to the retrained first model; and
third accuracy of the retrained first model, where the third accuracy is used to indicate accuracy of a model output result presented by the retrained first model in a training phase or a testing phase.

Further, after step S720, the method further includes:
the second network element sends the information of the retrained first model to a sixth network element, where the sixth network element is a network element that needs to use the first model for inference.

Further, the sixth network element includes a model inference function network element.

Further, the first accuracy can be used to indicate at least one of the following:

correctness of the inference result of the task; and
deviation of the inference result of the task.

Steps S710 and S720 can implement the method embodiments shown in FIG. 2 and FIG. 3, with the same technical effect achieved. To avoid repetition, details are not described herein again.

As can be learned from the technical solution of the foregoing embodiment, in this embodiment of this application, the first information is received from the first network element, where the first information is used to indicate that the accuracy of the first model does not meet the accuracy requirement or decreases, and the first model is retrained based on the first information. Therefore, when the accuracy of the model decreases, the first model can be retrained in time, and accuracy of inference on the task can be quickly restored, to avoid making an incorrect policy decision or performing an inappropriate operation.

Based on the foregoing embodiment, that the second network element obtains second data of the first model based on the first information includes:
the second network element determines a source device of the second data of the first model; and
the second network element obtains the second data from the source device.

Further, that the second network element obtains the second data from the source device includes:

the second network element sends data request information to the source device, where the data request information is used to request the source device to provide the second data, where
the data request information includes at least one of the following information:

identification information of a task, where the task is a task on which the first network element performs inference based on the first model;
constraint condition information of the task;
object information of the task;
identification information of the first model;
input data type information of the first model; and
output data type information of the first model.

Further, the source device of the second data is determined by at least one of the following:

the identification information of the task, where the task is the task on which the first network element performs inference based on the first model;
the constraint condition information of the task;
the identification information of the first model;
the input data type information of the first model; and
the output data type information of the first model.

This embodiment of this application can implement the method embodiment shown in FIG. 5, with the same technical effect achieved. To avoid repetition, details are not described herein again.

As can be learned from the technical solution of the foregoing embodiment, in this embodiment of this application, the second network element autonomously obtains, based on the first information, the second data of the first model from the source device of the second data, for retraining the first model. Therefore, the first model can be updated in time, and accuracy of inference on the task can be quickly restored, to avoid making an incorrect policy decision or performing an inappropriate operation.

Based on the foregoing embodiment, further, the second data includes first data of the task, and the task is the task on which the first network element performs inference based on the first model.

Further, a source device of the first data includes a fourth network element.

Further, the first data includes at least one of the following:

inference input data corresponding to the task;
inference result data corresponding to the task; and
tag data corresponding to the task.

Further, after the retraining the first model based on the first information, the method further includes:
the second network element stores information of the retrained first model in a fourth network element.

Further, the fourth network element includes a storage network element.

This embodiment of this application can implement the method embodiment shown in FIG. 4, with the same technical effect achieved. To avoid repetition, details are not described herein again.

As can be learned from the technical solution of the foregoing embodiment, in this embodiment of this application, the fourth network element stores the first data of the task, so that when the accuracy of the model decreases, related data corresponding to the task can be stored in time, for retraining the first model. Therefore, the first model can be updated in time, and accuracy of inference on the task can be quickly restored, to avoid making an incorrect policy decision or performing an inappropriate operation.

The model accuracy determining method provided in this embodiment of this application may be performed by a model accuracy determining apparatus. A model accuracy determining apparatus provided in an embodiment of this application is described by assuming that the model accuracy determining method is performed by the model accuracy determining apparatus in this embodiment of this application.

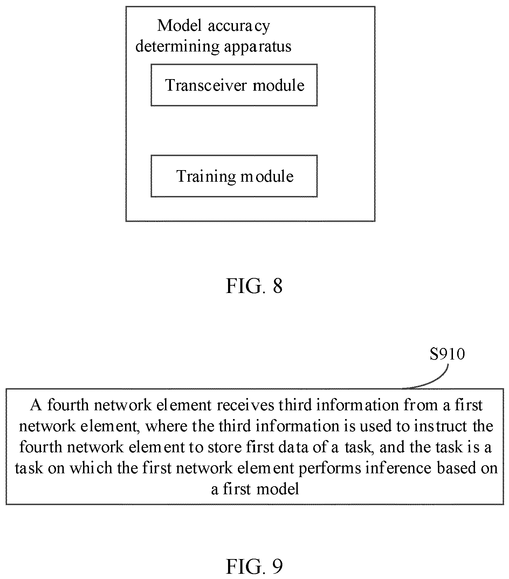

As shown in FIG. 8, the model accuracy determining apparatus includes a transceiver module 801 and a training module 802.

The transceiver module 801 is configured to receive first information from a first network element, where the first information is used to indicate that accuracy of a first model does not meet an accuracy requirement or decreases; and the training module 802 is configured to retrain the first model based on the first information.

Further, the transceiver module 801 is further configured to send a model performance subscription request to the first network element, where the model performance subscription request is used to request the first network element to monitor the accuracy of the first model.

Further, the first network element includes a model inference function network element.

Further, a second network element includes a model training function network element.

Further, the transceiver module 801 is further configured to send second information to the first network element, where the second information includes information of the retrained first model.

Further, the first information includes at least one of the following:

identification information of the first model;
identification information of a task, where the task is a task on which the first network element performs inference based on the first model;
constraint condition information of the task;
information indicating that the accuracy of the first model does not meet the accuracy requirement or decreases;

first accuracy, where the first accuracy is used to indicate accuracy of the first model on an inference result of the task; request indication information for retraining the first model;

indication information for re-requesting a model, used to request to obtain a model corresponding to the task;

first data of the task, where the first data is used to retrain the first model; and

information of a fourth network element, where the fourth network element is a network element that receives and stores the first data from the first network element.

Further, the transceiver module 801 is configured to obtain second data of the first model based on the first information; and

the training module 802 is configured to retrain the first model based on the second data.

Further, the second information further includes at least one of the following:

condition information applicable to the retrained first model; and

third accuracy of the retrained first model, where the third accuracy is used to indicate accuracy of a model output result presented by the retrained first model in a training phase or a testing phase.

Further, the transceiver module 801 is further configured to send the information of the retrained first model to a sixth network element, where the sixth network element is a network element that needs to use the first model for inference.

Further, the sixth network element includes a model inference function network element.

Further, the first accuracy can be used to indicate at least one of the following:

correctness of the inference result of the task; and

deviation of the inference result of the task.

As can be learned from the technical solution of the foregoing embodiment, in this embodiment of this application, the first information is received from the first network element, where the first information is used to indicate that the accuracy of the first model does not meet the accuracy requirement or decreases, and the first model is retrained based on the first information. Therefore, when the accuracy of the model decreases, the first model can be retrained in time, and accuracy of inference on the task can be quickly restored, to avoid making an incorrect policy decision or performing an inappropriate operation.

Based on the foregoing embodiment, further, the transceiver module is configured to:

determine a source device of the second data of the first model; and

obtain the second data from the source device.

Further, the transceiver module is configured to send data request information to the source device, where the data request information is used to request the source device to provide the second data, where

the data request information includes at least one of the following information:

identification information of a task, where the task is a task on which the first network element performs inference based on the first model;

constraint condition information of the task;

object information of the task;

identification information of the first model;

input data type information of the first model; and

output data type information of the first model.

Further, the source device of the second data is determined by at least one of the following:

the identification information of the task, where the task is the task on which the first network element performs inference based on the first model;

the constraint condition information of the task;

the identification information of the first model;

the input data type information of the first model; and

the output data type information of the first model.

As can be learned from the technical solution of the foregoing embodiment, in this embodiment of this application, the second data of the first model is autonomously obtained from the source device of the second data based on the first information, for retraining the first model. Therefore, the first model can be updated in time, and accuracy of inference on the task can be quickly restored, to avoid making an incorrect policy decision or performing an inappropriate operation.

Based on the foregoing embodiment, further, the second data includes first data of the task, and the task is the task on which the first network element performs inference based on the first model.

Further, a source device of the first data includes a fourth network element, and the fourth network element is a network element that receives and stores the first data from the first network element.

Further, the first data includes at least one of the following:

    inference input data corresponding to the task;
    inference result data corresponding to the task; and
    tag data corresponding to the task.

Further, after the first model is retrained based on the first information, the transceiver module is further configured to store information of the retrained first model in a fourth network element.

Further, the fourth network element includes a storage network element.

As can be learned from the technical solution of the foregoing embodiment, in this embodiment of this application, the fourth network element stores the first data of the task, so that when the accuracy of the model decreases, related data corresponding to the task can be stored in time, for retraining the first model. Therefore, the first model can be updated in time, and accuracy of inference on the task can be quickly restored, to avoid making an incorrect policy decision or performing an inappropriate operation.

The model accuracy determining apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The model accuracy determining apparatus provided in this embodiment of this application can implement each process implemented in the method embodiment in FIG. 7, with the same technical effect achieved. To avoid repetition, details are not described herein again.

As shown in FIG. 9, an embodiment of this application further provides another model accuracy determining method. The method is performed by a fourth network element, and the fourth network element includes a storage network element. In other words, the method may be performed by software or hardware installed in the fourth network element. The method includes the following step.

S910. The fourth network element receives third information from a first network element, where the third information is used to instruct the fourth network element to store first data of a task, and the task is a task on which the first network element performs inference based on a first model, where
the first data includes at least one of the following:

    inference input data corresponding to the task;
    inference result data corresponding to the task; and
    tag data corresponding to the task.

Further, the third information includes at least one of the following:

    identification information of the task;
    constraint condition information of the task;
    object information of the task;
    the inference input data corresponding to the task;
    the inference result data corresponding to the task;
    the tag data corresponding to the task; and
    storage cause information.

Further, after step S910, the method further includes:

    the fourth network element receives data request information from a second network element, where the second network element is a network element that provides the first model; and
    the fourth network element sends the first data of the task to the second network element.

Further, the data request information includes at least one of the following information:

identification information of the task, where the task is the task on which the first network element performs inference based on the first model;
constraint condition information of the task;
object information of the task;
identification information of the first model;
input data type information of the first model; and
output data type information of the first model.

Further, after the sending the first data of the task to the second network element, the method further includes: the fourth network element receives information of the retrained first model from the second network element.

Further, after the receiving information of the retrained first model from the second network element, the method further includes:

the fourth network element sends the information of the retrained first model to the first network element.

Further, the first network element includes a model inference function network element.

Further, the second network element includes a model training function network element.

Further, the fourth network element includes a storage network element.

Step S910 can implement the method embodiment shown in FIG. 4, with the same technical effect achieved. To avoid repetition, details are not described herein again.

As can be learned from the technical solution of the foregoing embodiment, in this embodiment of this application, the fourth network element stores the first data of the task, so that when the accuracy of the model decreases, related data corresponding to the task can be stored in time, for retraining the first model. Therefore, the first model can be updated in time, and accuracy of inference on the task can be quickly restored, to avoid making an incorrect policy decision or performing an inappropriate operation.

The model accuracy determining method provided in this embodiment of this application may be performed by a model accuracy determining apparatus. A model accuracy determining apparatus provided in an embodiment of this application is described by assuming that the model accuracy determining method is performed by the model accuracy determining apparatus in this embodiment of this application.

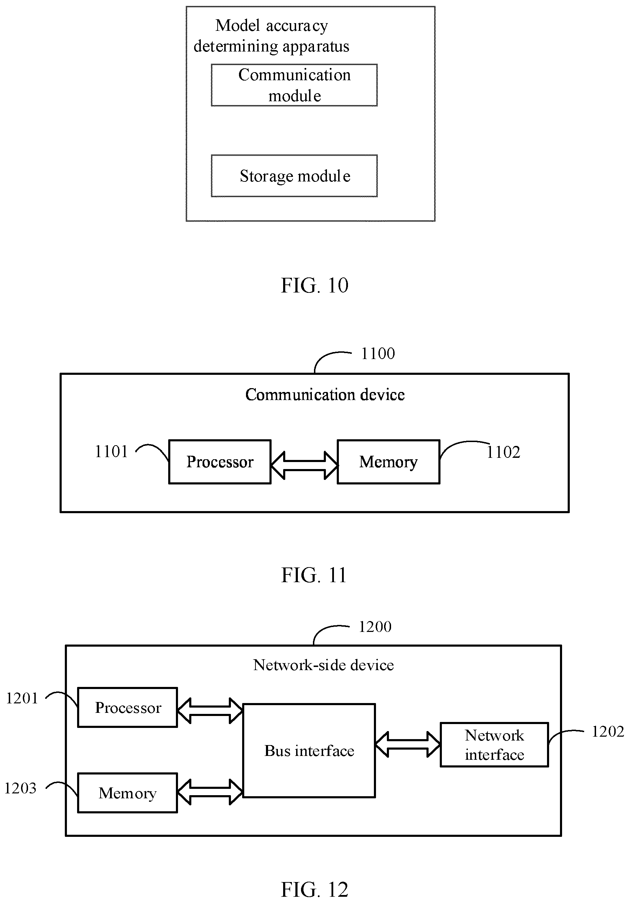

As shown in FIG. 10, the model accuracy determining apparatus includes a communication module 1001 and a storage module 1002.

The communication module 1001 is configured to receive third information from a first network element, where the third information is used to instruct to store first data of a task, and the task is a task on which the first network element performs inference based on a first model; and the storage module 1002 is configured to store the first data of the task, where

the first data includes at least one of the following:

inference input data corresponding to the task;
inference result data corresponding to the task; and
tag data corresponding to the task.

Further, the third information includes at least one of the following:

identification information of the task;
constraint condition information of the task;
object information of the task;
the inference input data corresponding to the task;
the inference result data corresponding to the task;
the tag data corresponding to the task; and
storage cause information.

Further, the communication module 1001 is further configured to receive data request information from a second network element, where the second network element is a network element that provides the first model; and
a fourth network element sends the first data of the task to the second network element.

Further, the data request information includes at least one of the following information:

identification information of the task, where the task is the task on which the first network element performs inference based on the first model;

constraint condition information of the task;
object information of the task;
identification information of the first model;
input data type information of the first model; and
output data type information of the first model.

Further, the communication module 1001 is further configured to receive information of the retrained first model from the second network element.

Further, the communication module 1001 is further configured to send the information of the retrained first model to the first network element.

Further, the first network element includes a model inference function network element.

Further, the second network element includes a model training function network element.

Further, the model accuracy determining apparatus includes a storage network element.

As can be learned from the technical solution of the foregoing embodiment, in this embodiment of this application, the first data of the task is stored, so that when the accuracy of the model decreases, related data corresponding to the task can be stored in time, for retraining the first model. Therefore, the first model can be updated in time, and accuracy of inference on the task can be quickly restored, to avoid making an incorrect policy decision or performing an inappropriate operation.

The model accuracy determining apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The model accuracy determining apparatus provided in this embodiment of this application can implement each process implemented in the method embodiment in FIG. 9, with the same technical effect achieved. To avoid repetition, details are not described herein again.

Optionally, as shown in FIG. 11, an embodiment of this application further provides a communication device 1100, including a processor 1101 and a memory 1102. The memory 1102 stores a program or instructions executable on the processor 1101. For example, when the communication device 1100 is a terminal, and the program or instructions are executed by the processor 1101, the steps of the foregoing embodiment of the model accuracy determining method are implemented, with the same technical effect achieved. When the communication device 1100 is a network-side device, and the program or instructions are executed by the processor 1101, the steps of the foregoing embodiment of the model accuracy determining method are implemented, with the same technical effect achieved. To avoid repetition, details are not described herein again.

Specifically, an embodiment of this application further provides a network-side device. As shown in FIG. 12, the network-side device 1200 includes a processor 1201, a network interface 1202, and a memory 1203. The network interface 1202 is, for example, a common public radio interface (common public radio interface, CPRI).

Specifically, the network-side device 1200 in this embodiment of the present invention further includes a program or instructions stored in the memory 1203 and executable on the processor 1201. When the processor 1201 invokes the program or instructions in the memory 1203, the method performed by each module shown in FIG. 6, FIG. 8, and FIG. 10 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the model accuracy determining method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip, where the chip includes a processor and a communication interface, the communication interface is coupled to the processor, and the processor is configured to run a program or instructions to implement each process of the foregoing embodiment of the model accuracy determining method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the model accuracy determining method, with the same technical effect achieved. To avoid repetition, details are not described herein again.

An embodiment of this application further provides a model accuracy determining system, including network-side devices. The network-side devices include a first network element, a second network element, and a fourth network element. The first network element may be configured to perform the steps of the foregoing model accuracy determining method. The second network element may be configured to perform the steps of the foregoing model accuracy determining method. The fourth network element may be configured to perform the steps of the foregoing model accuracy determining method.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a read only memory (Read Only Memory, ROM) or random access memory (Random Access Memory, RAM), a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A model accuracy determining method, comprising:

    performing, by a first network element, inference on a task based on a first model;
    determining, by the first network element, first accuracy corresponding to the first model, wherein the first accuracy is used to indicate accuracy of the first model on an inference result of the task; and
    in a case that the first accuracy reaches a preset condition, sending, by the first network element, first information to a second network element, wherein the first information is used to indicate that accuracy of the first model does not meet an accuracy requirement or decreases, wherein
    the second network element is a network element that provides the first model.

2. The method according to claim 1, wherein before the sending, by the first network element, first information to a second network element, the method further comprises:
    receiving, by the first network element, a model performance subscription request from the second network element, wherein the model performance subscription request is used to request the first network element to monitor the accuracy of the first model.

3. The method according to claim 1, wherein after the sending the first information to the second network element, the method further comprises:
    receiving, by the first network element, second information from the second network element, wherein the second information comprises information of a retrained first model.

4. The method according to claim 1, wherein the determining, by the first network element, first accuracy corresponding to the first model comprises:

obtaining, by the first network element based on the first model, inference result data corresponding to the task;
obtaining, by the first network element, tag data corresponding to the inference result data; and
calculating, by the first network element, the first accuracy of the first model based on the inference result data and the tag data.

5. The method according to claim 1 or 4, wherein the first accuracy can be used to indicate at least one of the following:

   correctness of the inference result of the task; and
   deviation of the inference result of the task.

6. The method according to claim 1, wherein the first information comprises at least one of the following:

   identification information of the first model;
   identification information of the task;
   constraint condition information of the task;
   information indicating that the accuracy of the first model does not meet the accuracy requirement or decreases;
   the first accuracy;
   request indication information for retraining the first model;
   indication information for re-requesting a model, used to request to obtain a model corresponding to the task;
   first data of the task, wherein the first data is used to retrain the first model; and
   information of a fourth network element, wherein the fourth network element is a network element that receives and stores the first data from the first network element.

7. The method according to claim 1, wherein the method further comprises:
   sending, by the first network element, third information to a fourth network element, wherein the third information is used to instruct the fourth network element to store first data of the task.

8. The method according to claim 7, wherein the third information comprises at least one of the following:

   identification information of the task;
   constraint condition information of the task;
   object information of the task;
   inference input data corresponding to the task;
   inference result data corresponding to the task;
   tag data corresponding to the task; and
   storage cause information.

9. The method according to any one of claims 6 to 8, wherein the first data comprises at least one of the following:

   inference input data corresponding to the task;
   output result data corresponding to the task; and
   tag data corresponding to the task.

10. The method according to claim 3, wherein the second information further comprises at least one of the following:

    condition information applicable to the retrained first model; and
    third accuracy of the retrained first model, wherein the third accuracy is used to indicate accuracy of a model output result presented by the retrained first model in a training phase or a testing phase.

11. The method according to claim 4, wherein the obtaining, by the first network element, tag data corresponding to the inference result data comprises:

    determining, by the first network element, a source device of tag data corresponding to the task; and
    obtaining, by the first network element, the tag data from the source device.

12. The method according to claim 4, wherein after the obtaining, based on the first model, the inference result data corresponding to the task, the method further comprises:
    sending, by the first network element, the inference result data to a third network element, wherein the third network element is a network element that triggers the task.

13. The method according to claim 1, wherein the preset condition comprises at least one of the following conditions that:

the first accuracy is lower than a first threshold;
the first accuracy is lower than second accuracy; and
the first accuracy is lower than the second accuracy, and a difference between the first accuracy and the second accuracy is greater than a second threshold, wherein
the second accuracy is used to indicate accuracy of a model output result presented by the first model in a training phase or a testing phase.

14. The method according to claim 1, wherein in the case that the first accuracy reaches the preset condition, the method further comprises:

requesting, by the first network element, to obtain a second model from a fifth network element, wherein the second model is a model provided by the fifth network element and used for the task; and
performing, by the first network element, inference on the task based on the second model.

15. The method according to claim 1, wherein in the case that the first accuracy reaches the preset condition, the method further comprises:
sending, by the first network element, fourth information to a third network element, wherein the fourth information is used to indicate that the accuracy of the first model does not meet the accuracy requirement or decreases.

16. The method according to claim 15, wherein the fourth information comprises at least one of the following:

all or a part of description information of the task;
information indicating that the accuracy of the first model does not meet the accuracy requirement or decreases;
the first accuracy;
recommended operation information; and
waiting time information, wherein the waiting time information is used to indicate a time required for the first network element to resume inference on the task.

17. The method according to claim 1, wherein the first network element comprises a model inference function network element.

18. The method according to claim 1, wherein the second network element comprises a model training function network element.

19. The method according to claim 12, wherein the third network element comprises a consumer network element.

20. The method according to claim 6, wherein the fourth network element comprises a storage network element.

21. The method according to claim 14, wherein the fifth network element comprises a model training function network element.

22. A model accuracy determining apparatus, comprising:

an execution module, configured to perform inference on a task based on a first model;
a calculation module, configured to determine first accuracy corresponding to the first model, wherein the first accuracy is used to indicate accuracy of the first model on an inference result of the task; and
a transmission module, configured to send first information to a second network element in a case that the first accuracy reaches a preset condition, wherein the first information is used to indicate that accuracy of the first model does not meet an accuracy requirement or decreases, wherein
the second network element is a network element that provides the first model.

23. A model accuracy determining method, comprising:

receiving, by a second network element, first information from a first network element, wherein the first information is used to indicate that accuracy of a first model does not meet an accuracy requirement or decreases; and

retraining, by the second network element, the first model based on the first information.

24. The method according to claim 23, wherein before the receiving, by a second network element, first information from a first network element, the method further comprises:
sending, by the second network element, a model performance subscription request to the first network element, wherein the model performance subscription request is used to request the first network element to monitor the accuracy of the first model.

25. The method according to claim 23, comprising:
sending, by the second network element, second information to the first network element, wherein the second information comprises information of a retrained first model.

26. The method according to claim 23, wherein the first information comprises at least one of the following:

identification information of the first model;
identification information of a task, wherein the task is a task on which the first network element performs inference based on the first model;
constraint condition information of the task;
information indicating that the accuracy of the first model does not meet the accuracy requirement or decreases;
first accuracy, wherein the first accuracy is used to indicate accuracy of the first model on an inference result of the task;
request indication information for retraining the first model;
indication information for re-requesting a model, used to request to obtain a model corresponding to the task;
first data of the task, wherein the first data is used to retrain the first model; and
information of a fourth network element, wherein the fourth network element is a network element that receives and stores the first data from the first network element.

27. The method according to claim 26, wherein the first accuracy can be used to indicate at least one of the following:

correctness of the inference result of the task; and
deviation of the inference result of the task.

28. The method according to claim 23, wherein the retraining the first model based on the first information comprises:

obtaining, by the second network element, second data of the first model based on the first information; and
retraining, by the second network element, the first model based on the second data.

29. The method according to claim 28, wherein the obtaining, by the second network element, second data of the first model based on the first information comprises:

determining, by the second network element, a source device of the second data of the first model; and
obtaining, by the second network element, the second data from the source device.

30. The method according to claim 29, wherein the obtaining, by the second network element, the second data from the source device comprises:

sending, by the second network element, data request information to the source device, wherein the data request information is used to request the source device to provide the second data, wherein
the data request information comprises at least one of the following information:

identification information of a task, wherein the task is a task on which the first network element performs inference based on the first model;
constraint condition information of the task;
object information of the task;
identification information of the first model;
input data type information of the first model; and

output data type information of the first model.

31. The method according to claim 29, wherein the source device of the second data is determined by at least one of the following:

identification information of a task, wherein the task is a task on which the first network element performs inference based on the first model;
constraint condition information of the task;
identification information of the first model;
input data type information of the first model; and
output data type information of the first model.

32. The method according to any one of claims 28 to 30, wherein the second data comprises first data of a task, and the task is a task on which the first network element performs inference based on the first model.

33. The method according to claim 32, wherein a source device of the first data comprises a fourth network element, and the fourth network element is a network element that receives and stores the first data from the first network element.

34. The method according to claim 32, wherein the first data comprises at least one of the following:

inference input data corresponding to the task;
inference result data corresponding to the task; and
tag data corresponding to the task.

35. The method according to claim 25, wherein the second information further comprises at least one of the following:

condition information applicable to the retrained first model; and
third accuracy of the retrained first model, wherein the third accuracy is used to indicate accuracy of a model output result presented by the retrained first model in a training phase or a testing phase.

36. The method according to claim 23, wherein after the retraining the first model based on the first information, the method further comprises:
storing, by the second network element, information of a retrained first model in a fourth network element.

37. The method according to claim 23, wherein after the retraining the first model based on the first information, the method further comprises:
sending, by the second network element, information of a retrained first model to a sixth network element, wherein the sixth network element is a network element that needs to use the first model for inference.

38. The method according to claim 23, wherein the first network element comprises a model inference function network element.

39. The method according to claim 23, wherein the second network element comprises a model training function network element.

40. The method according to claim 26, wherein the fourth network element comprises a storage network element.

41. The method according to claim 37, wherein the sixth network element comprises a model inference function network element.

42. A model accuracy determining apparatus, comprising:

a transceiver module, configured to receive first information from a first network element, wherein the first information is used to indicate that accuracy of a first model does not meet an accuracy requirement or decreases; and
a training module, configured to retrain the first model based on the first information.

43. A model accuracy determining method, comprising:

receiving, by a fourth network element, third information from a first network element, wherein the third information is used to instruct the fourth network element to store first data of a task, and the task is a task on which the first network element performs inference based on a first model, wherein

the first data comprises at least one of the following:

inference input data corresponding to the task;
inference result data corresponding to the task; and
tag data corresponding to the task.

44. The method according to claim 43, wherein the third information comprises at least one of the following:

identification information of the task;
constraint condition information of the task;
object information of the task;
the inference input data corresponding to the task;
the inference result data corresponding to the task;
the tag data corresponding to the task; and
storage cause information.

45. The method according to claim 43, wherein after the receiving the third information from the first network element, the method further comprises:

receiving, by the fourth network element, data request information from a second network element, wherein the second network element is a network element that provides the first model; and
sending, by the fourth network element, the first data of the task to the second network element.

46. The method according to claim 45, wherein the data request information comprises at least one of the following information:

identification information of the task, wherein the task is the task on which the first network element performs inference based on the first model;
constraint condition information of the task;
object information of the task;
identification information of the first model;
input data type information of the first model; and
output data type information of the first model.

47. The method according to claim 45, wherein after the sending the first data of the task to the second network element, the method further comprises:
receiving, by the fourth network element, information of a retrained first model from the second network element.

48. The method according to claim 47, wherein after the receiving the information of the retrained first model from the second network element, the method further comprises:
sending, by the fourth network element, the information of the retrained first model to the first network element.

49. The method according to claim 43, wherein the first network element comprises a model inference function network element.

50. The method according to claim 45, wherein the second network element comprises a model training function network element.

51. The method according to claim 43, wherein the fourth network element comprises a storage network element.

52. A model accuracy determining apparatus, comprising:

a communication module, configured to receive third information from a first network element, wherein the third information is used to instruct to store first data of a task, and the task is a task on which the first network element performs inference based on a first model; and

28

a storage module, configured to store the first data of the task, wherein the first data comprises at least one of the following:

inference input data corresponding to the task;
inference result data corresponding to the task; and
tag data corresponding to the task.

53. A network-side device, comprising a processor and a memory, wherein a program or instructions are stored in the memory and executable on the processor, and when the program or instructions are executed by the processor, steps of the model accuracy determining method according to any one of claims 1 to 21 are implemented, or steps of the model accuracy determining method according to any one of claims 23 to 41 are implemented, or steps of the model accuracy determining method according to any one of claims 43 to 51 are implemented.

54. A readable storage medium, wherein the readable storage medium stores a program or instructions, and when the program or instructions are executed by a processor, steps of the model accuracy determining method according to any one of claims 1 to 21 are implemented, or steps of the model accuracy determining method according to any one of claims 23 to 41 are implemented, or steps of the model accuracy determining method according to any one of claims 43 to 51 are implemented.

Core network
device

Access network
device

Terminal

FIG. 1

S210

A first network element performs inference on a task based on a first model

S220

The first network element determines first accuracy corresponding to the first model, where the first accuracy is used to indicate accuracy of the first model on an inference result of the task

S230

In a case that the first accuracy reaches a preset condition, the first network element sends first information to a second network element, where the first information is used to indicate that accuracy of the first model does not meet an accuracy requirement or decreases, where the second network element is a network element that provides the first model

FIG. 2

FIG. 3

| NWDAF | | | Consumer NF | Source device of training data | Source device of inference data |
|---|---|---|---|---|---|
| MTLF | | AnLF | | | |

A1. Collect training data

A2. Perform training

A3. Task request message

A4. Request a model

A5. Information of a first model

A6. Determine related information

A7. Obtain inference input data

A8. Perform inference on a task

A9. Inference result data

A10. Obtain tag data

A11. Calculate first accuracy

A12. Determine whether a preset condition is met

A13. First information

ADRF

B14. Third information

B15. Obtain first data

A14. Perform retraining

B16. Information of the first model

FIG. 4

FIG. 5

Model accuracy
determining apparatus

Execution module

Calculation module

Transmission module

FIG. 6

S710

A second network element receives first information from a first
network element, where the first information is used to indicate that
accuracy of a first model does not meet an accuracy requirement or
decreases

S720

The second network element retrains the first model based on the
first information

FIG. 7

Model accuracy
determining apparatus

Transceiver module

Training module

FIG. 8

S910

A fourth network element receives third information from a first
network element, where the third information is used to instruct the
fourth network element to store first data of a task, and the task is a
task on which the first network element performs inference based on
a first model

FIG. 9

Model accuracy
determining apparatus

Communication
module

Storage module

FIG. 10

1100

Communication device

1101 — Processor ⟺ Memory — 1102

FIG. 11

1200

Network-side device

1201 — Processor ⟺ Bus interface ⟺ Network interface — 1202

1203 — Memory ⟺

FIG. 12

## INTERNATIONAL SEARCH REPORT

International application No.

**PCT/CN2023/080018**

### A. CLASSIFICATION OF SUBJECT MATTER

G06N5/04(2023.01)i

According to International Patent Classification (IPC) or to both national classification and IPC

### B. FIELDS SEARCHED

Minimum documentation searched (classification system followed by classification symbols)

IPC:G06N, H04W, H04L

Documentation searched other than minimum documentation to the extent that such documents are included in the fields searched

Electronic data base consulted during the international search (name of data base and, where practicable, search terms used)

CNTXT, WOTXT, EPTXT, USTXT, VCN, VEN, CNKI, IEEE, BING: 机器学习, 模型, 更新, 准确度, 重训练, 训练, 网元, 标签, 推理, 预测, machine learning, model, updat+, accura+, precise, training, network element, label, predict+

### C. DOCUMENTS CONSIDERED TO BE RELEVANT

| Category* | Citation of document, with indication, where appropriate, of the relevant passages | Relevant to claim No. |
|---|---|---|
| X | CN 111629319 A (CHINA MOBILE COMMUNICATION LTD., RESEARCH INSTITUTE et al.) 04 September 2020 (2020-09-04) <br> figures 1-11, claims 4 and 12-14, and description, paragraphs [0070]-[0088] | 1-54 |
| X | WO 2021155579 A1 (HUAWEI TECHNOLOGIES CO., LTD.) 12 August 2021 (2021-08-12) <br> figures 1-11, claims 27 and 30, and description, page 17, line 25 to page 23, line 35 | 23-24, 28-29, 36, 39, 42, 53-54 |
| A | CN 110119808 A (HUAWEI TECHNOLOGIES CO., LTD.) 13 August 2019 (2019-08-13) <br> entire document | 1-54 |
| A | CN 112883024 A (HUAWEI TECHNOLOGIES CO., LTD.) 01 June 2021 (2021-06-01) <br> entire document | 1-54 |
| A | US 2020401945 A1 (HUAWEI TECHNOLOGIES CO., LTD.) 24 December 2020 (2020-12-24) <br> entire document | 1-54 |

☐ Further documents are listed in the continuation of Box C.   ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **26 May 2023** | **31 May 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/080018**

| Patent document cited in search report | | | Publication date (day/month/year) | Patent family member(s) | | | Publication date (day/month/year) |
|---|---|---|---|---|---|---|---|
| CN | 111629319 | A | 04 September 2020 | None | | | |
| WO | 2021155579 | A1 | 12 August 2021 | US | 2022368617 | A1 | 17 November 2022 |
| | | | | EP | 4087193 | A1 | 09 November 2022 |
| CN | 110119808 | A | 13 August 2019 | US | 2020364571 | A1 | 19 November 2020 |
| | | | | WO | 2019153878 | A1 | 15 August 2019 |
| | | | | EP | 3734518 | A1 | 04 November 2020 |
| CN | 112883024 | A | 01 June 2021 | None | | | |
| US | 2020401945 | A1 | 24 December 2020 | WO | 2019184836 | A1 | 03 October 2019 |
| | | | | EP | 3739811 | A1 | 18 November 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210224481
- CN 202210958867